Europäisches Patentamt

European Patent Office

Office européen des brevets

(11) Publication number: **0 242 860**
**A1**

## EUROPEAN PATENT APPLICATION

(21) Application number: 87105878.0

(22) Date of filing: 22.04.87

(51) Int. Cl.⁴: **F16L 58/14** , B32B 1/08 ,
B32B 9/04 , B29C 63/32 ,
B65G 53/02 , C04B 37/00 ,
C21B 7/10 , F27D 1/00

(30) Priority: 23.04.86 JP 93939/86

(43) Date of publication of application:
**28.10.87 Bulletin 87/44**

(84) Designated Contracting States:
**AT BE CH DE ES FR GB IT LI LU NL SE**

(71) Applicant: **Oga, Motoko**
**1-27, Tateba 2-chome Naniwa-ku**
**Osaka(JP)**

(72) Inventor: **Oga, Motoko**
**1-27, Tateba 2-chome Naniwa-ku**
**Osaka(JP)**

(74) Representative: **Reinhard, Skuhra, Weise**
**Leopoldstrasse 51**
**D-8000 München 40(DE)**

(54) **Abrasion resistant pipe and method of producing the same.**

(57) An abrasion resistant pipe comprising a pipe body (I) having a pair of open ends (Ia) and an inner circumferential surface, and a plurality of ceramic plates (2, 2') attached to and entirely covering the inner circumferential surface of the pipe body (I), wherein the ceramic plates (2, 2') are arranged in intimate contact with each other both circumferentially and axially of the pipe body (I), and the ceramic plates (2, 2') include main ceramic plates (2) which are arranged in at least one helical row.

FIG. 1

EP 0 242 860 A1

## "ABRASION RESISTANT PIPE AND METHOD OF PRODUCING THE SAME"

This invention relates generally to internally lined pipes, and more particularly to such pipe which is internally provided with an abrasion resistant lining and to a method of producing the same.

As is well known, pipes used for transporting solids-containing liquids or particle-or powder-laden air are liable to wear because the inner circumferential surface of the pipe constantly contacts or collides with the solids moving at high speed.

Drawn steel pipes, though known to be mechanically strongest, still fail to provide a sufficient abrasion resistance for the purpose of transporting solids-containing fluids for a prolonged period. An idea of hardening the entire inner circumferential surface of the drawn steel pipe by surface treatment is both economically and technically infeasible.

It is conceivable to use pipes made of a ceramic material which is known to be excellent in abrasion resistance. Such an idea, however, is also unrealizable because of difficulty in molding and high production cost.

Cast iron pipes internally lined with mortar are already known. The mortar lining, which is originally provided to protect the pipe from corrosion, can also protect the pipe from wear to a certain degree. However, the mortar lining, which is inferior in abrasion resistance to ceramic materials, is not suitable for prolonged use under highly abrasive conditions.

It is, therefore, an object of the present invention to provide a highly abrasion resistant pipe which is easy to manufacture.

According to one aspect of the invention, there is provided an abrasion resistant pipe comprising a pipe body having a pair of open ends and an inner circumferential surface, and an abrasion resistant lining attached to and entirely covering the inner circumferential surface of the pipe body, characterized in that the lining comprises a plurality of ceramic plates arranged in intimate contact with each other both circumferentially and axially of the pipe body, and the ceramic plates including main ceramic plates which are arranged in at least one helical row.

According to another aspect of the invention, there is provided a method of producing an abrasion resistant pipe comprising a pipe body having a pair of open ends and an inner circumferential surface, and an abrasion resistant lining fixed to and entirely covering the inner circumferential surface, characterized in that the method comprises the steps of preparing at least one self-retaining band of longitudinally aligned main ceramic plates, introducing the band into the pipe body in a helical pattern through one open end of the pipe body, and causing the helically patterned band to be fixed to the inner circumferential surface of the pipe body.

Various features and advantages of the invention will become apparent from the following detailed description given with reference to the accompanying drawings, in which:

Figure I is a side view, in longitudinal section and with a part cut away, of an abrasion resistant pipe embodying the invention;

Figure 2 is an enlarged perspective view showing a main ceramic plate band to be incorporated into the pipe of Figure I;

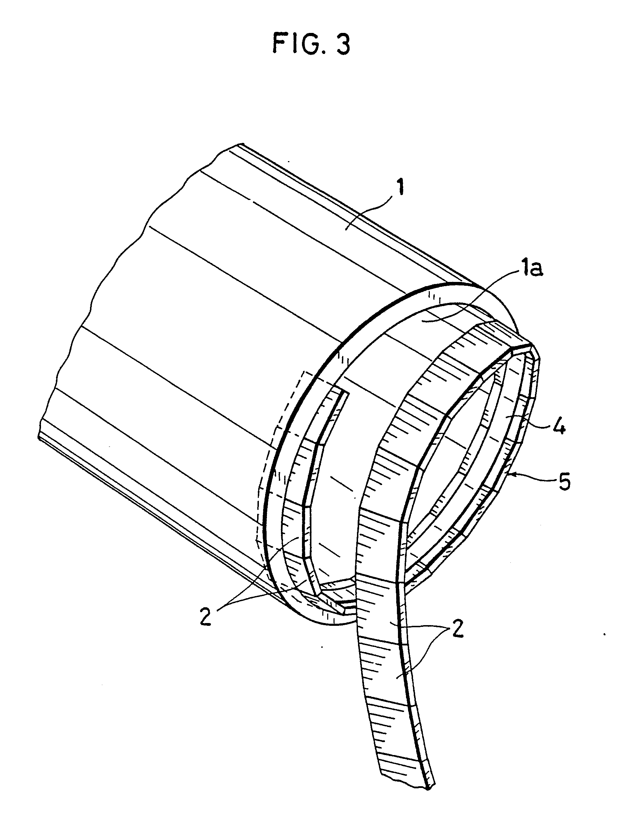

Figure 3 is an enlarged perspective view showing a method of introducing the band of Figure 2 into a pipe body;

Figure 4 is an enlarged plan view showing a compensating ceramic end strip to be incorporated into the pipe of Figure I;

Figure 5 is a side view, partly in longitudinal section and partly cut away, showing another method of introducing the band of Figure 2 into a pipe body;

Figure 6 is a side view, in longitudinal section, of an abrasion resistant bent pipe embodying the invention;

Figure 7 is an enlarged plan view showing an intermediate compensating ceramic strip to be incorporated into the pipe of Figure 6;

Figure 8 is a perspective view showing a modified main ceramic plate band;

Figure 9 is a plan view showing another modified main ceramic plate band;

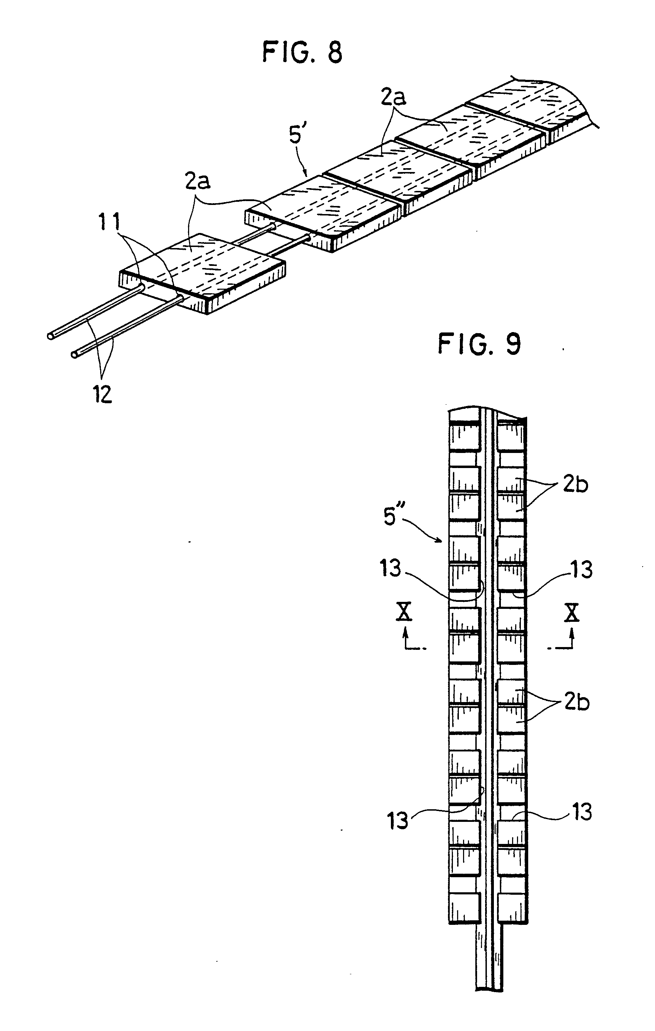

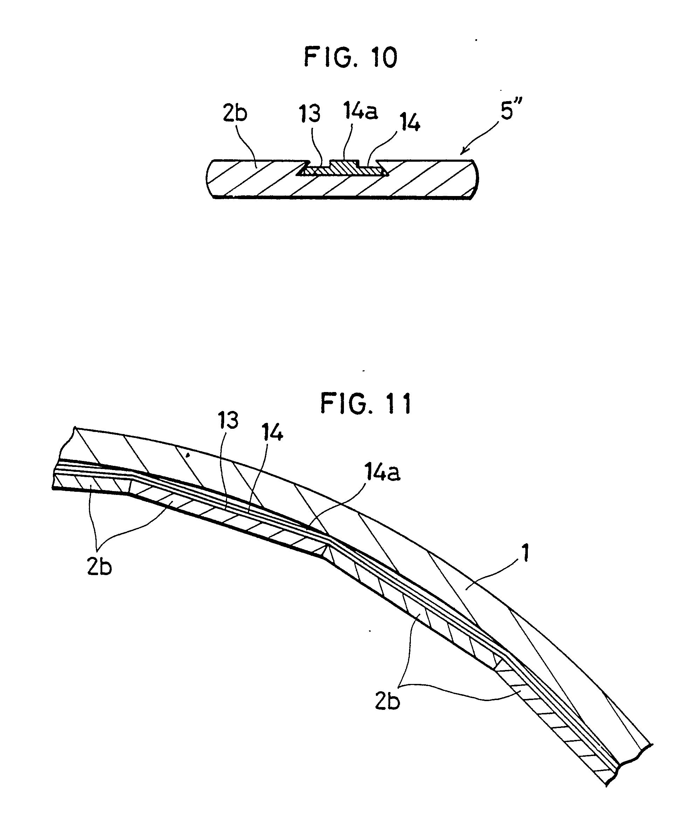

Figure I0 is a section taken on lines X-X in Figure 9; and

Figure II is a view, in traverse section, showing a part of an abrasion resistant pipe which incorporates the modified band of Figure 9.

Referring now to Figure I of the accompanying drawings, an abrasion resistant pipe according to the invention comprises a tubular pipe body I and a cylindrical abrasion resistant lining 3 provided on the inner circumferential of the pipe body I. According to the illustrated example, the pipe body I is made of a metal, such as steel. The lining 3 is made of ceramic, preferably sintered alumina, and held attached to the inner circumference of the pipe body I by means of a layer 8 of a thermosetting resin adhesive for example, as hereinafter described.

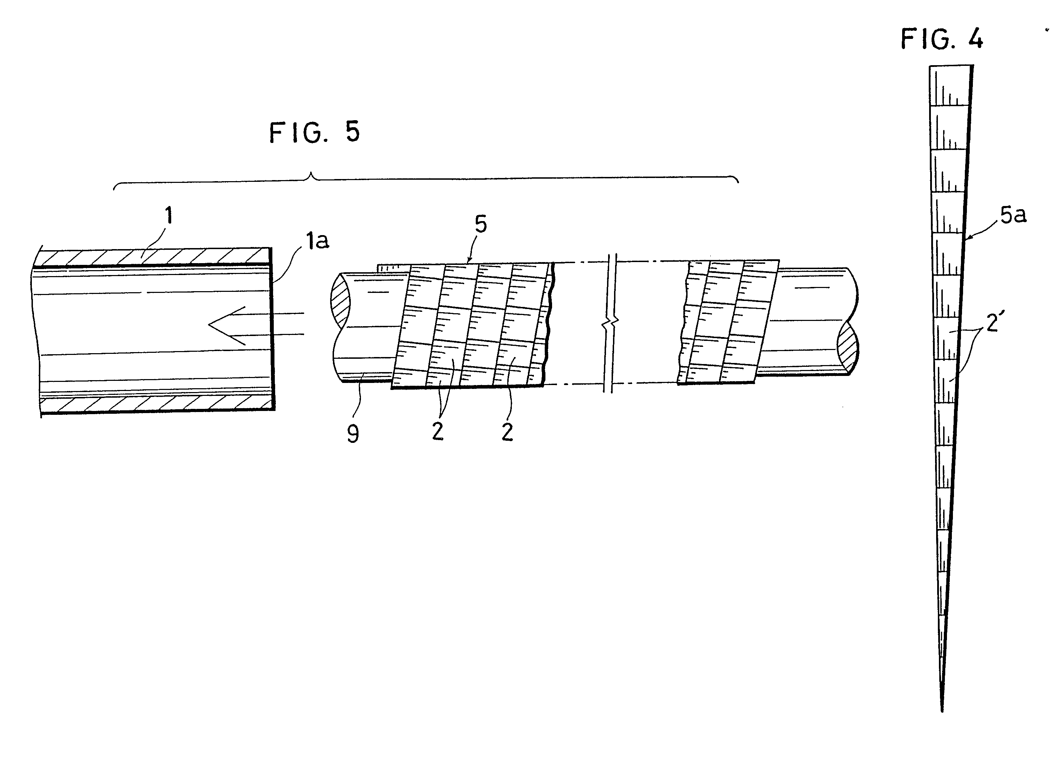

More specifically, the abrasion resistant lining 3 comprises a helical band 5 of main ceramic plates 2 and a pair of compensating end strips 5a of auxiliary ceramic plates 2'. The main ceramic plate band 5 has a constant width over the entire length thereof. Each of the compensating end strips 5a is triangular in shape (see also Figure 4) and located at a corresponding opening end of the pipe body I. Thus, both end faces of the cylindrical lining 3 is flush with the respective end faces of the pipe body I. As apparent from Figure I, the main and auxiliary ceramic plates 2, 2' are in intimate contact with each other both circumferentially and axially of the pipe body I, so that the inner circumferential surface of the pipe body I is entirely covered by the lining 3.

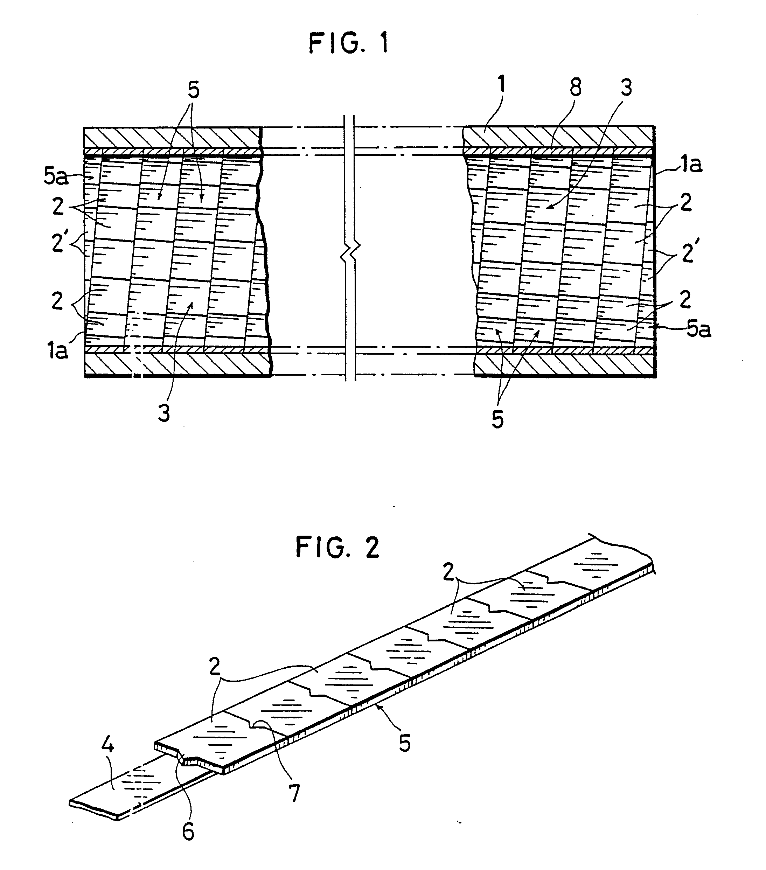

Prior to helical insertion into the pipe body I, the band 5 includes a adhesive tape 4 on which is adhesively attached an aligned row of the main ceramic plates 2, as illustrated in Figure 2. The tape 4 may be made of paper having a relatively high tensile strength. Since the tape 4 is removed or washed off after insertion of the band 5 into the pipe body I, an adhesive of a relatively weak adhesion, such as starch, is preferably used for the tape 4.

Each of the main ceramic plates 2 is generally rectangular, preferably square, and has a projection 6 on one side traversing the band 5 as well as a complementary recess 7 on the opposite side. The projection 6 of one main ceramic plate 2 engages in the recess 7 of an adjacent one to prevent relative deviation of each other transversely of the tape 4. In this way, all of the main ceramic plates 2 can be exactly aligned on the tape 4 with ease.

In case the number of the main ceramic plates 2 per single loop of the helical band 5 (Figure I) is large, each plate 2 may be flat, as shown in Figure 2. Alternatively, the main ceramic plate 2 may be arcuately curved with a curvature corresponding to that of the inner circumference of the pipe body I, whereby the plate 2 can be more intimately and stably anchored on the inner circumference of the pipe body I.

In fabrication, the layer 8 of thermosetting resin adhesive (Figure I) is first formed on the inner circumference of the pipe body I. Subsequently, a first loop is formed from the main ceramic plate band 5 and introduced into the pipe body I through one opening end Ia thereof. A second loop of the band 5, which is continuous with the first loop, is then formed and introduced into the pipe body I, causing the first loop to advance axially further into the pipe body. A similar operation is repeated until the first loop reaches the other opening end Ia of the pipe body I.

The above insertion of the band 5 results in that each loop of the band helix 5 is pressed axially against an adjacent loop, thereby ensuring intimacy of the main ceramic plates 2 axially of the pipe body I. The band 5 may be pressed longitudinally thereof during such insertion into the pipe body I

because this will provide intimate contact of the band 5 with the inner circumference of the pipe body I as well as intimate contact between the main ceramic plates circumferentially of the pipe body I (longitudinally of the band 5). Further, the use of the continuous band 5 enables formation of successive loops in any number and in any diameter, thereby making it possible to completely line pipe bodies of various lengths and diamters or a pipe body which varies in diameter along its length.

As a final step of the lining inserting operation, each of the compensating end strips 5a (Figure 4) is placed at a corresponding opening end Ia of the pipe body I in a manner such that the wider width end of the strip 5a comes in contact with the leading or trailing end of the helical band 5. Such a triangular strip 5a may be obtained by cutting a length of a ceramic plate band which is similar to the one illustrated in Figure 2.

The pipe body I lined as above is then placed in a heating furnace (not shown) and heated to a temperature enough to set the thermosetting adhesive layer 8, which results in that all of the ceramic plates 2, 2' are firmly fixed to the inner circumference of the pipe body I. If required, the abrasion resistant lining 3 may be subjected to radially outward pressure by a known method (e.g. tamping sand into the lined pipe body I) prior to heating the lined pipe body I in order to achieve more intimate attachment of the lining 3 to the inner circumference of the pipe body I.

Figure 5 illustrates an alternative method for inserting the main ceramic plate band 5 into the pipe body I. More specifically, the band 5 is helically and axially intimately pre-wound on a cylindrical or columnar mandrel 9 whose outer diameter is substantially equal to or slightly smaller than the inner diameter of the pipe body I minus double the thickness of the band 5. The helical band 5 is then inserted into the pipe body I together with the mandrel 9 which alone is thereafter withdrawn from the pipe body I. Each compensating end strip 5a (Figure 4) can be placed in position at a corresponding opening end Ia of the pipe body in a manner similar to the foregoing example.

According to the example of Figure 5, fixation of the helical band 5 and each end strip 5a to the pipe body I may be provided by a layer of a thermosetting resin adhesive previously applied to the inner circumference of the pipe body I in substantially the same manner as described in the foregoing example. Alternatively, a molten metal may be poured into a small annular gap between the pipe body I and the cylindrical lining 5, 5a before the mandrel 9 is withdrawn, the molten metal being then allowed to harden to more firmly fix the lining 5, 5a to the pipe body I.

Instead of using a single band of main ceramic plates, it is also possible to use two parallel bands of main ceramic plates, thereby reducing the time required for entirely lining the pipe body l. For the same purpose, a different single band may be used which comprises two parallel rows of main ceramic plates attached on a wide adhesive tape.

The present invention is not limited to straight pipes but applicable also to bent pipes.

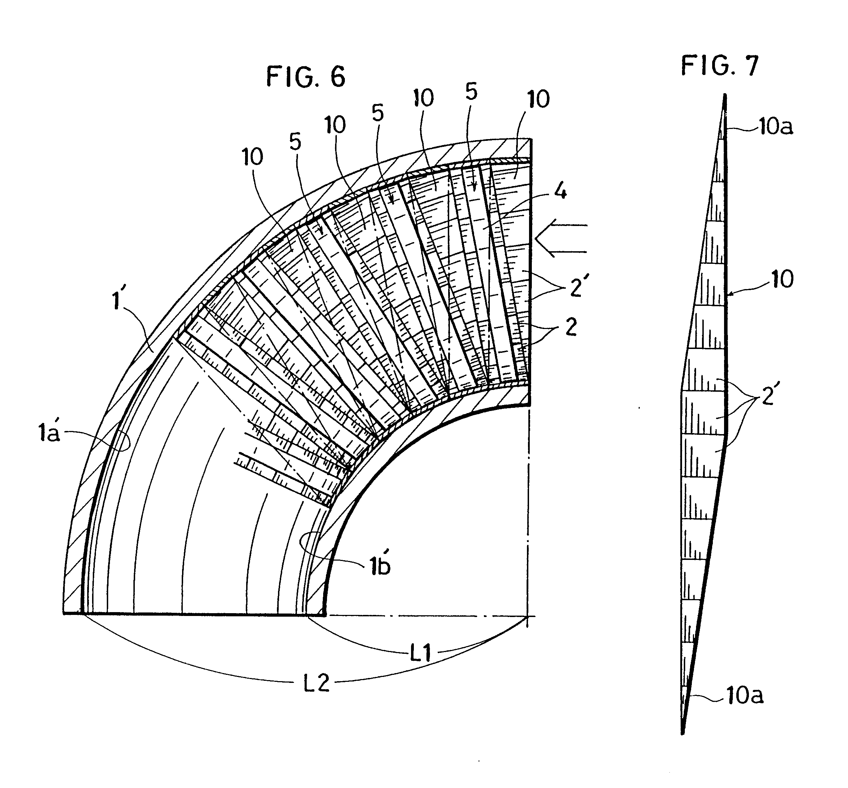

Referring to Figure 6, there is illustrated a bent pipe body l' the inner circumference of which has a smallest curvature portion lb' and a largest diameter portion lc'. A main ceramic plate band 5, which is similar to the one shown in Figure 2, is helically inserted into the pipe body l' with an intermediate compensating ceramic strip l0 interposed between each two adjacent loops of the helical band 5.

The compensating intermediate strip l0, as better illustrated in Figure 7, has a pair of sharpened tips l0a and comprises a plurality of auxiliary ceramic plates 2'. The length of the strip l0 corresponds to the inner circumferential length of the pipe body l'. Such strip l0 may be obtained by cutting a length of a ceramic band which is similar to the one illustrated in Figure 2.

As easily appreciated, the strip l0 is arranged between each two adjacent loops of the helical band 5 in such a manner that both sharpened tips l0a thereof are positioned at the smallest curvature portion lc' of the pipe body 5'. In this way, the inner circumference of the pipe body l' is completely lined with the helical band 5 and the respective compensating strips l0. The maximum width of the strip l0 is determined by the curvature of the bent pipe body l'. In case the ratio of the radius Ll of the smallest diameter portion lb' to the radius L2 of the largest diameter portion lc' is l/2 for example, the maximum width of the strip l0 should be equal to the width of the band 5.

Figure 8 shows a modified band 5' which, similarly to the one shown in Figure 2, includes an aligned row of main ceramic plates 2a. Each of the plates 2a has a pair of parallel through-holes ll through which respectively extend a pair of wires l2, whereby all of the plates 2a are held aligned and prevented from deviating relative to each other transversely of the band 5'. The wires l2, though providing a similar plate holding function, is superior to the adhesive tape 4 illustrated in Figure 2 in that they require no removal or washing off after the band 5' is inserted into a pipe body (not shown in Figure 8).

Figures 9 to ll represent a further modified band 5" which comprises a plurality of main ceramic plates 2b retained in an aligned row by a metallic belt l4. More particularly, each of the plates 2b is square in shape and formed with a pair of mutually intersecting grooves l3. As illustrated in Figure l0, each of the grooves l3 is wider at its opening mouth than at its bottom, and the belt l4 is wider than the opening mouth of the groove l3 but narrower than the bottom thereof. Thus, the belt l4 fitted in a selected groove l3 of the intersecting pair retains the the plate 2b while preventing lateral displacement thereof.

The square shape of the plate 2b and the provision of the intersecting groove pair l3 make it possible to use either one of the paired intersecting grooves l3 for insertion of the belt l4, which means readier assembly into the ceramic plate band 5" because of more freedom in directivity of the plate 2b. Of course, the plate 2b may have any other rectangular shape than square, and one of the paired intersecting grooves l3 may be omitted.

Preferably, the metallic belt l4 is integrally formed with a longitudinal projection l4a which protrudes out slightly from the opening mouth of each longitudinally aligned groove l3. The longitudinal projection l4a comes into contact with the inner circumference of a metallic pipe body l at a position corresponding to the boundary between each two circumferentially adjacent ceramic plates 2b, as shown in Figure ll. Since an adhesive layer (not shown) applied to the inner circumference of the pipe body adheres better to the metallic belt projection l4a than to the ceramic plate 2b, the provision of the longitudinal projection ensures more stable fixation of the band 5" to the pipe body l.

The invention being thus described, it is obvious that the same may be varied in many ways. For instance, the pipe body l (l') may be made of a resin, such as vinyl chloride resin, instead of a metal. Further, the shape of the main ceramic plates 2 (2a, 2b) is optional, provided that a selected shape ensures intimate contact between the individual ceramic plates both circumferentially and axially of the pipe body l (l'). Such variations are not to be regarded as a departure from the spirit and scope of the invention, and all such modifications as would be obvious to those skilled in the art are intended to be included within the scope of the following claims.

## Claims

l. An abrasion resistant pipe comprising a pipe body (l, l') having a pair of open ends (la) and an inner circumferential surface, and an abrasion resistant lining (3) attached to and entirely covering said inner circumferential surface of said pipe body, characterized in that said lining (3) comprises a plurality of ceramic plates (2, 2', 2a, 2b) arranged in intimate contact with each other both circumferentially and axially of said pipe body (l, l'),

and said ceramic plates including main ceramic plates (2, 2a, 2b) which are arranged in at least one helical row.

2. The abrasion resistant pipe as defined in claim I, wherein said ceramic plates include auxiliary ceramic pipes (2') positioned at each open end (Ia) of said pipe body (I) and forming a compensating triangular end strip (5a).

3. The abrasion resistant pipe as defined in claim I, wherein each of said main ceramic plates (2, 2a, 2b) is rectangular in shape.

4. The abrasion resistant pipe as defined in claim 3, wherein each said rectangular main ceramic plate (2) is formed with a projection (6) on one side thereof traversing said row as well as with a recess (7) complementary to said projection and located on another side opposite to said one side.

5. The abrasion resistant pipe as defined in claim 3, wherein said each rectangular main ceramic plate (2a) is formed with a pair of parallel through-holes (II) extending along said row, and a pair of wires (I2) respectively pass through said through-holes.

6. The abrasion resistant pipe as defined in claim 3, wherein said each rectangular main ceramic plate (2b) is formed with a groove (I3) extending along said row and receiving a belt (I4), and said groove has an open mouth narrower than said belt and a bottom wider than said belt.

7. The abrasion resistant pipe as defined in claim 6, wherein said belt (I4) is integrally formed with a longitudinal projection (I4a) which protrudes slightly from said open mouth of said groove (I3).

8. The abrasion resistant pipe as defined in claim 7, wherein said pipe body (I) and said belt (I4) are metallic.

9. The abrasion resistant pipe as defined in claim 6, wherein said each main ceramic plate (2b) is square and formed with a second groove (I3) identical in configuration to but in intersecting relation to the first mentioned groove.

I0. The abrasion resistant pipe as defined in claim I, wherein said pipe body (I') is bent, said ceramic plates include auxiliary ceramic plates (2') located between each two adjacent loops of said row and forming an intermediate compensating strip (I0), and said intermediate compensating strip has a pair of sharpened tips (I0a) with a maximum width portion centrally positioned.

II. A method of producing an abrasion resistant pipe comprising a pipe body (I, I') having a pair of open ends (Ia) and an inner circumferential surface, and an abrasion resistant lining (3) fixed to and entirely covering said inner circumferential surface, characterized in that said method comprises the steps of preparing at least one self-retaining band (5, 5', 5") of longitudinally aligned main ceramic plates (2, 2a, 2b), introducing said band into said

pipe body (I, I') in a helical pattern through one open end (Ia) of said pipe body, and causing said helically patterned band to be fixed to said inner circumferential surface of said pipe body.

I2. The method as defined in claim II, wherein said band (5) comprises an adhesive tape (4) on which said main ceramic plates (2) are adhesively attached, and said adhesive tape is removed after fixation of said helically patterned band to said pipe body (I, I').

I3. The method as defined in claim II, wherein said band (5') comprises a pair of wires (I2) which respectively pass through a pair of parallel through-holes (II) of each main ceramic plate (2a) extending along said band.

I4. The method as defined in claim II, wherein said band (5") comprises a belt (I4) which is received in a groove (I3) of each main ceramic plate (2b) extending along said band, and said groove has an open mouth narrower than said belt and a bottom wider than said belt.

I5. The method as defined in claim II, wherein the fixation of said helically patterned band (5, 5', 5") to said pipe body (I, I') is achieved by a layer (8) of a thermosetting resin adhesive applied to said inner circumferential surface of said pipe body prior to the introduction of said band into said pipe body, said adhesive layer being heated to set after the introduction of said band into said pipe body.

I6. The method as defined in claim II, wherein the introduction of said band (5, 5', 5") into said pipe body (I, I') is conducted while said band is formed into said helical pattern.

I7. The method as defined in claim II, wherein said band (5) is formed into said helical pattern on a mandrel (9), and said helically patterned band is introduced into said pipe body (I) together with said mandrel which alone is thereafter withdrawn from said pipe body.

I8. The method as defined in claim I7, wherein the fixation of said helically patterned band (5) to said inner circumferential surface of said pipe body (I) is achieved by pouring a molten metal into an annular gap between said pipe body and said helically patterned band while said mandrel (9) is within said pipe body, said molten metal being subsequently allowed to harden.

I9. The method as defined in claim II, wherein a triangular compensating end strip (5a) is placed at each open end (Ia) of said pipe body (I) prior to the fixation of said band (5) to said pipe body (I), said end strip including a plurality of auxiliary ceramic plates (2').

20. The method as defined in claim II, wherein when said band (5) is formed into said helical pattern, an intermediate compensating strip (I0) is interposed between each two adjacent loops of the helically patterned band, said intermediate strip having a pair of sharpened tips (l0a) with a maximum width portion located therebetween, said intermediate strip including a plurality of auxiliary ceramic plates (2').

# FIG. 1

# FIG. 2

## FIG. 3

# FIG. 5

# FIG. 4

FIG. 6

FIG. 7

0 242 860

FIG. 8

FIG. 9

## FIG. 10

## FIG. 11

## DOCUMENTS CONSIDERED TO BE RELEVANT

EP 87105878.0

| Category | Citation of document with indication, where appropriate, of relevant passages | Relevant to claim | CLASSIFICATION OF THE APPLICATION (Int. Cl.4) |
|---|---|---|---|
| A | DERWENT ACCESSION No. 80-00 016C, Questel Telesystems (WPIL) DERWENT PUBLICATIONS LTD.; London   * Abstract * & DE-A-2 832 079 (KARRENA GMBH) -- | 1 | F 16 L 58/14 B 32 B 1/08 B 32 B 9/04 B 29 C 63/32 B 65 G 53/02 C 04 B 37/00 C 21 B 7/10 F 27 D 1/00 |
| A | DERWENT ACCESSION No. 83-60 927K, Questel Telesystems (WPIL) DERWENT PUBLICATIONS LTD., London   * Abstract * & SU-949 003 (DNEPR METALLURGY IN) -- | 1 | |
| X | DERWENT ACCESSION No. 84-103 816, Questel Telesystems (WPIL) DERWENT PUBLICATIONS LTD., London   * Abstract * & JP-A-59-045 977 (ASAMI GLASS KK) -- | 1 | |

**TECHNICAL FIELDS SEARCHED (Int. Cl.4)**

| Category | Citation | Relevant to claim | |
|---|---|---|---|
| A | DERWENT ACCESSION No. 84-174 615, Questel Telesystems (WPIL) DERWENT PUBLICATIONS LTD., London   * Abstract * & JP-A-59-097 581 (BABCOCK-HITACHI KK) -- | 1 | F 16 L 9/00 F 16 L 57/00 F 16 L 58/00 B 32 B 1/00 B 32 B 9/00 B 29 C 63/00 B 65 G 53/00 C 04 B 37/00 C 21 B 7/00 F 27 D 1/00 |

The present search report has been drawn up for all claims

| Place of search | Date of completion of the search | Examiner |
|---|---|---|
| VIENNA | 29-06-1987 | SCHUGANICH |

| | European Patent Office | **EUROPEAN SEARCH REPORT** | | Application number |
|---|---|---|---|---|

| **DOCUMENTS CONSIDERED TO BE RELEVANT** | | EP 87105878.0 |
|---|---|---|

| Category | Citation of document with indication, where appropriate, of relevant passages | Relevant to claim | CLASSIFICATION OF THE APPLICATION (Int. Cl.4) |
|---|---|---|---|
| A | DERWENT ACCESSION No. 85-181 311, Questel Telesystems (WPIL) <br><br> DERWENT PUBLICATIONS LTD., London <br><br> * Abstract * <br><br> & JP-A-60-109 823 (SANWAGUM KOGYO KK) <br><br> -- | 1 | |
| X | DERWENT ACCESSION No. 85-187 114, Questel Telesystems (WPIL) <br><br> DERWENT PUBLICATIONS LTD., London <br><br> * Abstract * <br><br> & JP-A-60-115 431 (MITSUYAMA KOKI KK) <br><br> -- | 1 | |
| X | DERWENT ACCESSION No. 85-187 115, Questel Telesystems(WPIL) <br><br> DERWENT PUBLICATIONS LTD., London <br><br> * Abstract * <br><br> & JP-A-60-115 432 (MITSUYAMA KOKI KK) <br><br> -- | 1 | **TECHNICAL FIELDS SEARCHED (Int. Cl.4)** |
| A | DERWENT ACCESSION No. 87-022 421, Questel Telesystems (WPIL) <br><br> DERWENT PUBLICATIONS LTD., London <br><br> * Abstract * <br><br> & DD-A-239 393 (VEB IFA-INGENIEUR) <br><br> -- | 1 | |

The present search report has been drawn up for all claims

| Place of search | Date of completion of the search | Examiner |
|---|---|---|
| VIENNA | 29-06-1987 | SCHUGANICH |

| | **DOCUMENTS CONSIDERED TO BE RELEVANT** | | EP 87105878.0 |

| Category | Citation of document with indication, where appropriate, of relevant passages | Relevant to claim | CLASSIFICATION OF THE APPLICATION (Int. Cl.4) |
|---|---|---|---|
| A | FR − A1 − 2 546 266 (MITSUI & CO. LTD + MIYAMA ENGINEERING CO. LTD) | | |
| | -- | | |
| A | US − A − 4 091 133 (PAPAYOANOU) | | |
| | ---- | | |
| | | | **TECHNICAL FIELDS SEARCHED (Int. Cl.4)** |

The present search report has been drawn up for all claims

| Place of search | Date of completion of the search | Examiner |
|---|---|---|
| VIENNA | 29−06−1987 | SCHUGANICH |